# EUROPEAN PATENT SPECIFICATION

(11) **EP 2 009 814 B1**
(45) Date of publication and mention of the grant of the patent: **22.12.2010**
(21) Application number: 08157493.1
(22) Date of filing: 03.06.2008
(51) Int. Cl.: H04B 7/08

(54) **System and method for receiving and combining multiple antenna signals**
System und Verfahren zum Empfangen und Kombinieren von mehreren Antennensignalen
Système et procédé de réception et de combinaison de plusieurs signaux d'antennes

(30) Priority: 28.06.2007 US 823688
(43) Date of publication of application: 31.12.2008
(73) Proprietor: Delphi Technologies, Inc., Troy, Michigan 48007 (US)
(72) Inventor: Fruit, Larry J., Kokomo, IN 46902 (US); Hiatt Jr., Michael L., Westfield, IN 46074 (US)
(74) Representative: Denton, Michael John

(56) References cited:
- EP-A- 0 967 738
- EP-A- 1 172 945
- EP-A- 1 301 003
- EP-A- 1 808 970

## Description

### Technical Field

The present invention generally relates to a system and method for receiving signals, and more particularly, to a system and method for receiving signals on multiple antennas and combining the multiple signals.

### Background of the Disclosure

Generally, when a receiver is mobile, such as being located onboard a vehicle, the probability of the antenna of the receiver being blocked and unable to receive the signal generally is more likely than if the receiver was non-mobile. When the antenna is blocked, the receiver typically does not adequately receive the signal and cannot produce a proper output. One way of increasing the probability that the receiver will receive the signal while the receiver is mobile is to transmit multiple signals and include multiple antennas on the receiver for receiving the multiple signals.

There are several techniques that have been developed for receiving the multiple signals when using multiple antennas. One such technique is the scanning/selection or switching diversity technique, which generally operates on the premise that if one antenna disposed on the vehicle is receiving a poor signal, another antenna spaced from the first antenna may be receiving a better signal. Thus, only one antenna is typically used for receiving the signal at any particular point in time. Generally, the system either compares the signals that are being received by the system's antennas to ascertain which antenna is receiving the better quality signal, or the system evaluates the signal received by a single antenna to determine a quality of the signal and simply switches to another antenna if the current signal is designated as unacceptable. However, the switching transients caused by switching between antennas can be audible under some circumstances, and since only one antenna is typically used at any point in time, the system may provide only marginal improvement during fringe reception when compared to single antenna systems.

Another technique is the equal-gain combining technique, which generally combines signals received by the antennas and an antenna array by correcting the phase differences between antennas, and then adding the signals coherently. Typically, no adjustments are made to the signals for any difference in the gains of the input signals, because only the phases of the input signals are adjusted for alignment in an equal-gain system. However, it is possible that the signal-to-noise ratio may be less than optimal. For example, if two inputs are combined, and one of those inputs contains mostly noise, the combined signal is likely to be of lower quality than the single non-corrected signal. In such a situation, it generally would have been ideal to use only the signal from the antenna that was not mostly noise.

EP-A-1301003 discloses a diversity receiver in which demodulation modules having AGC circuits include S/N detection circuits, respectively, configured to detect their reception quality. The detection signals of the S/N detection circuits are supplied to a decision circuit where their reception qualities are decided. In accordance with results of decision, a composition circuit composes received data in such a ratio as to set better quality data as prevailing data and eliminates any adverse effect on a diversity operation resulting from deteriorated quality data involved. EP-A-1172945 discloses a diversity demodulation apparatus which provides a data selective demodulation apparatus in a small scale of the circuit which is able to perform the stable demodulation even in fading conditions, and which has no deterioration of the demodulating efficiency. The apparatus selects two or more digital modulated signals in desired frequency band from RF signals received through an antenna, and then regenerates two or more sampling clocks from the digital modulated signals by the clock regenerator. The demodulated data derived from the digital modulated signals are delayed by specific periods in the delay units, and the delayed data are combined in the combiner. Then the delay amounts by in the delay units are so controlled that the sampling clock of the demodulated symbol of the demodulated signals to be supplied to the combiner become synchronized.

EP-A-0 967 738 discloses a diversity radio receiver system.

### Summary of the Invention

A receiving system and a receiving method according to the present invention is described by the appended claims.

### Brief Description of the Drawings

The present invention will now be described, by way of example, with reference to the accompanying drawings, in which:

Fig. 1 is a block diagram of a receiver system in accordance with one embodiment of the present invention;

Fig. 2A is a side plan view of a vehicle having multiple antennas, where a portion of the antenna patterns is shown and at least a portion of the antenna patterns is overlapping, in accordance with one embodiment of the present invention;

Fig. 2B is a top plan view of the vehicle shown in Fig. 2A having multiple antennas and overlapping antenna patterns, where a portion of the antenna patterns is shown, in accordance with one embodiment of the present invention;

Fig. 3 is an environmental view of a receiver system in accordance with one embodiment of the present invention; and

Fig. 4 is a flow chart illustrating a method of receiving and combining antenna signals in accordance with one embodiment of the present invention.

### Description of Preferred Embodiments

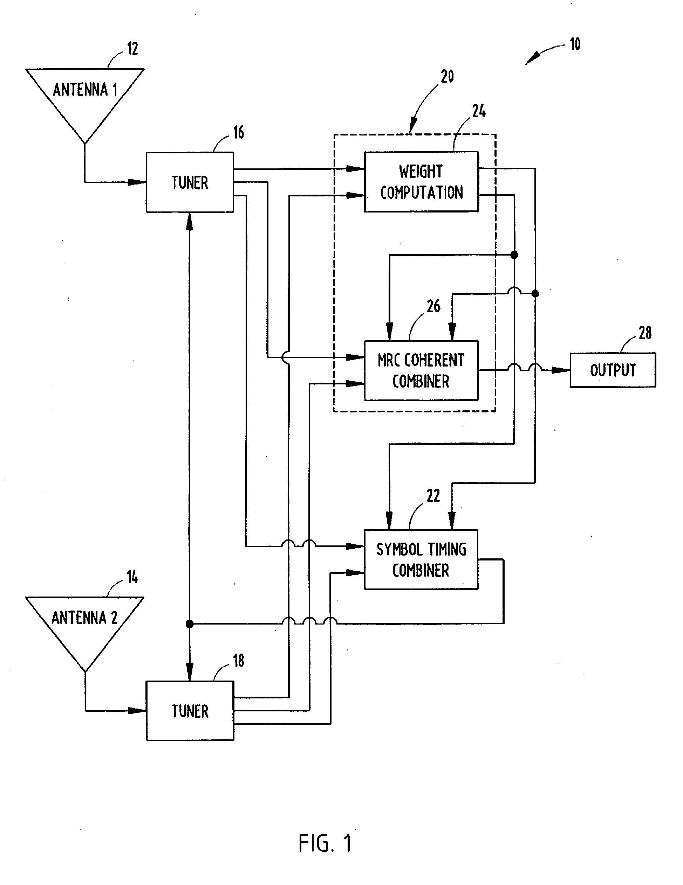

In reference to Fig. 1, a receiver system is generally shown at reference indicator 10. The receiver system 10 includes a plurality of antennas that receive signals. In a disclosed embodiment, the plurality of antennas includes a first antenna 12 and a second antenna 14, in which the first and second antennas 12,14 are proximate to one another. Generally, the first and second antennas 12,14 are proximate to one another, such that the symbol timing of the signal received by one antenna can be used for the other antenna, or a combined symbol timing can be used for both antennas 12,14, as described in greater detail herein. Thus, it is not required that the first and second antennas 12,14 be immediately adjacent to one another, but the first and second antennas 12,14 can be spaced from one another so that the other antennas symbol timing or a combined symbol timing can be used by the antenna.

The receiver system 10 also includes a plurality of tuners that are in communication with the plurality of antennas. Typically, a first tuner 16 of the plurality of tuners is in communication with the first antenna 12, and a second tuner 18 of the plurality of tuners is in communication with the second antenna 14. The receiver system 10 also includes a signal combiner generally indicated at 20 that is in communication with each of the plurality of tuners, such that the signal combiner 20 combines an output of the first and second tuners 16,18. It should be appreciated by those skilled in the art that any number of antennas 12,14 and tuners 16,18 can be used, so long as at least a portion of the antennas 12,14 are proximate to one another.

Generally, the maximal-ratio combining (MRC) technique of combining the signals includes adjusting the input signals according to the detected phase thereof, the magnitudes of the input signals are adjusted according to the detected phase thereof, and the magnitudes of the input signals are adjusted to yield the maximum signal-to-noise ratio. Typically, there are two methods available for implementing the MRC technique. According to one embodiment, the first method combines the antenna outputs using analog or digital circuitry. However, this method can be very expensive and complex to design due to the proper phase alignment and high-speed requirements. According to another embodiment, the second method of the MRC technique performs the combining at base band, such that each antenna path is down-converted from the radio frequency (RF). Further, the phase of the RF carrier is determined and processed through a matched filter, and the symbol timing is determined independently for each antenna path.

However, when one of the signals is blocked, and one of the antennas of a receiver system using the MRC technique does not receive the blocked signal, the receiver associated with the blocked antenna typically loses phase and symbol timing lock. When the antenna becomes un-blocked, and the receiver begins to receive the signal, the receiver must re-establish phase and symbol timing lock of the signal for the un-blocked antenna. Typically, re-establishing phase and symbol timing lock for the signal can cause the receiver to emit an undesirable output.

According to one embodiment, the receiver system 10 further includes a symbol timing combiner device 22 that is in communication with the signal combiner 20 and the first and second tuners 16,18. A combined output of the signal combiner 20 and outputs from each of the first and second tuners 16,18 are received by the symbol timing combiner device 22. The symbol timing combiner device 22 determines a combined symbol timing output that is received by each of the first and second tuners 16,18. Thus, the first and second tuners 16,18 process the signals received from the first and second antennas 12,14, respectively, based upon the combined symbol timing output. It should be appreciated by those skilled in the art that the first and second tuners 16,18 and the receiver system 10 can include additional suitable components or devices for processing the signals.

According to one embodiment, the signal combiner 20 includes a weight computation device 24 and an MRC coherent combiner device 26. The weight computation device 24 receives an input from each of the first and second tuners 16,18, and determines a required number of samples for each of the inputs from the first and second tuners 16,18 in order for the weight computation device 24 to emit an output at a suitable signal-to-noise ratio (Eb/No). Thus, the output of the weight computation device 24 is typically a value communicated to the MRC coherent combiner device 26, such that the MRC coherent combiner device 26 can emit an output that is biased towards a stronger signal communicated to the signal combiner 20 from the tuners 16,18. The output of the weight computation device 24 is received by the MRC coherent combiner device 26 and the symbol timing combiner device 22. The MRC coherent combiner device 26 combines the outputs of the first and second tuners 16,18 based upon the output of the weight computation device 24. The MRC coherent combiner device 26 then emits an audio and/or video output 28.

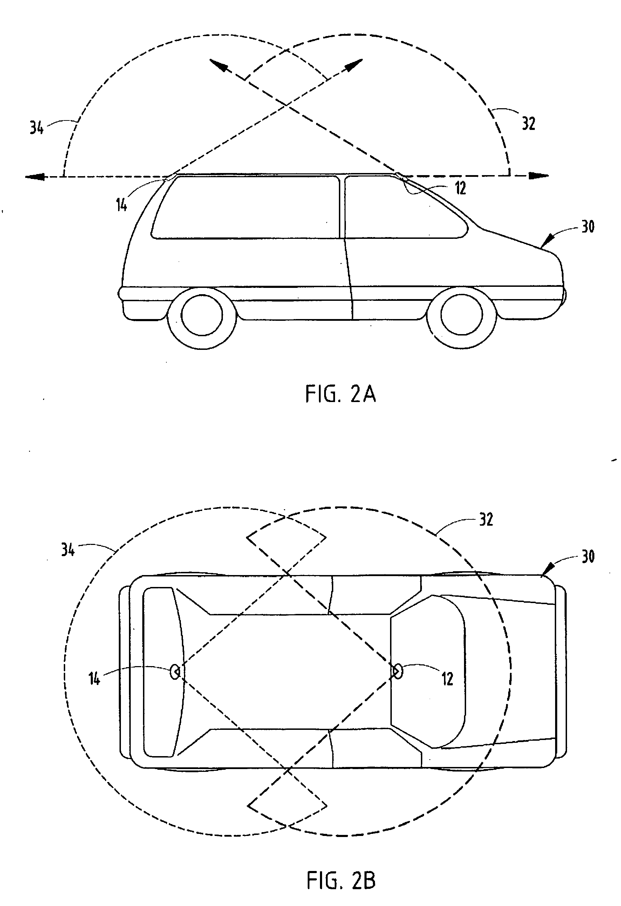

In reference to both Figs. 2A and 2B, the receiver system 10 can be used with a vehicle generally indicated at 30. The first and second antennas 12,14 are mounted on the vehicle 30 and are proximate to one another. Typically, a first antenna pattern 32 of the first antenna 12 has at least a portion that overlaps a second antenna pattern 34 of the second antenna 14. According to one embodiment, the first and second antenna patterns 32,34 are hemispherically shaped. When a signal is being received by both the first and second antennas 12,14, the signal is being received through the overlapping portion of the first and second antenna patterns 32,34. When this occurs, the symbol timing combiner device 22 determines a combined symbol timing rate, which is communicated to the first and second tuners 16,18, such that the first and second tuners 16,18 process the signals based upon the combined symbol timing rate. The combined symbol timing rate is sufficient to maintain symbol timing lock, and to process the signals communicated to the first and second tuners 16,18 due to the proximate location of the first and second antennas 12,14. The first and second tuners 16,18 maintain symbol timing lock, in that the tuners 16,18 do not have to re-establish symbol timing when the corresponding antennas 12,14 become unblocked, since the tuners 16,18 received the output from the symbol timing combiner 22.

By way of explanation and not limitation, when a signal is received by only the first antenna 12, such that the signal is being received through the nonoverlapping portion of the first antenna pattern 32, the symbol timing combiner device 22 determines a combined symbol timing rate based upon only the signal received by the first antenna 12. The symbol timing combiner device 22 communicates the combined symbol timing output, which is only based upon the symbol timing of the signal received by the first antenna 12 at this time, to the first and second tuners 16,18. Thus, the second tuner 18 does not lose symbol timing lock, because the combined symbol timing output can be used to maintain symbol timing lock by the second tuner 18, while the second antenna 14 is not receiving a signal due to the proximate location of the second antenna 14 to the first antenna 12. Thus, the symbol timing of the signal received by the first antenna 12 sufficiently corresponds to the symbol timing of the blocked signal not being received by the second antenna 14, such that the symbol timing of the two signals can be substituted for one another, and the first and second tuners 16,18 have a symbol timing value to maintain symbol timing lock even when the associated antenna 12,14 is not receiving a signal.

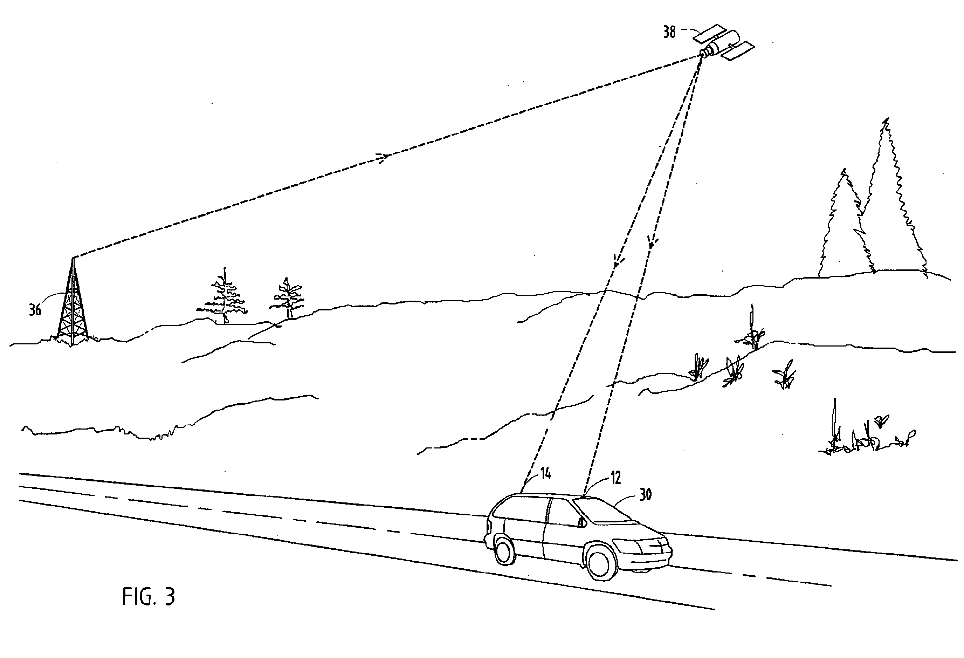

According to one embodiment shown in Fig. 3, the signal received by the first antenna 12 and second antenna 14 is a satellite radio frequency (RF) signal, such as a satellite digital audio radio (SDAR) signal. Typically, the satellite RF signal is transmitted by a transmitter 36, where the signal is uplinked or received by a satellite 38 and re-transmitted or downlinked by the satellite 38. Thus, as the vehicle 30 is mobile and one of the antenna patterns 32,34 is blocked, such that the corresponding antenna 12,14 does not receive a signal, the corresponding tuner 16,18 maintains symbol timing lock based upon the symbol timing of the un-blocked signal due to the tuners 16,18 receiving the output from the symbol timing combiner device 22. The tuners 16,18 can quickly continue processing the signals received by the antennas 12,14 when the blockage is removed, since the tuners 16,18 do not have to re-establish symbol timing lock.

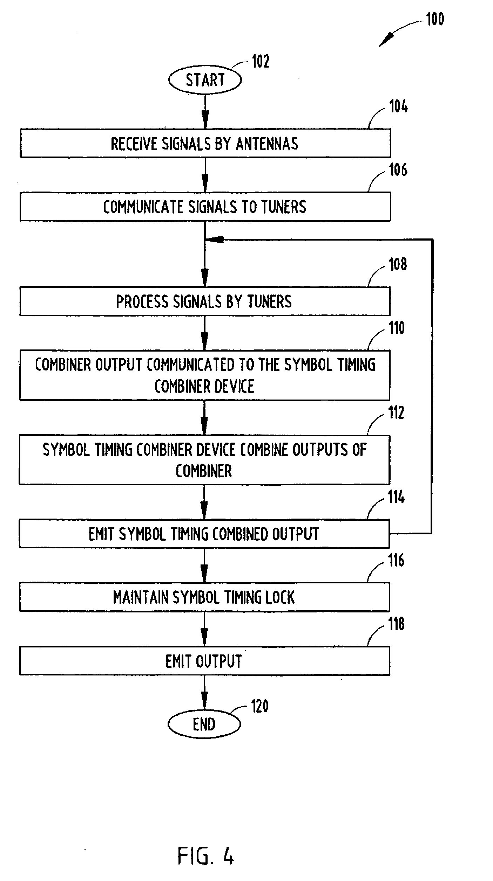

In reference to Figs. 1-4, a method of receiving and combining antenna signals is generally shown in Fig. 4 at 100. The method 100 starts at step 102, and proceeds to step 104, where the receiver system 10 receives signals by the plurality of antennas. The signals are received by the plurality of antennas, and communicated to the plurality of tuners at step 106. Typically, the signals received by the first antenna 12 are communicated to the first tuner 16, and the signals received by the second antenna 14 are communicated to the second tuner 18. The plurality of tuners process the signals at step 108.

The method 100 then proceeds to step 110, where the output of the signal combiner 20 is communicated to symbol timing combiner device 22. The output of the signal combiner 20 includes outputs from the weight computation device 24 and the MRC coherent combiner device 26. The symbol timing combiner device 22 combines the outputs of the signal combiner 20 at step 112. The symbol timing combiner device 22 emits a symbol timing combined output at step 114.

The method 100 includes the symbol timing combined output being communicated back to the plurality of tuners, so that the plurality of tuners can process the signals based upon the symbol timing combined output at step 108. Thus, at step 116, the plurality of tuners maintain symbol timing lock. An output is emitted at step 118, and the method ends at step 120.

Advantageously, the receiver system 10 and method 100 determine a combined symbol timing output that is used by the plurality of tuners, when processing the signals received by the plurality of antennas in order for each of the plurality of tuners to maintain symbol timing lock. Thus, when an antenna of the plurality of antennas is blocked and does not receive a signal, the tuner associated with the blocked antenna does not lose symbol timing lock, which typically takes a considerable amount of time to re-establish once the blocked antenna becomes un-blocked and begins receiving the signal again. Thus, the combined symbol timing output is an adequate value in order for the plurality of tuners to maintain symbol timing lock even though it is not the exact symbol timing rate that would be received by the signal. The combined symbol timing output can be used to maintain symbol timing lock for the plurality of receivers due to the proximate location of the plurality of antennas to one another.

## Claims

1. A receiver system (10) comprising:
a plurality of antennas (12, 14) that receive signals, wherein each of said plurality of antennas are proximate to one another;
a plurality of tuners (16, 18) in communication with said plurality of antennas, wherein said received signals are communicated to said plurality of tuners from said plurality of antennas;
a signal combiner (20) in communication with said plurality of tuners, wherein said signal combiner (20) combines an output of each of said plurality of tuners, and wherein said signal combiner (20) comprises a weight computation device (24) in communication with said plurality of tuners; and
a symbol timing combiner (22) in communication with said signal combiner (20) and said plurality of tuners, wherein outputs of said weight computation device (24) and outputs from each of said plurality of tuners (16, 18) are received by said symbol timing combiner (22) and said symbol timing combiner (22) emits a combined symbol timing output that is received by each of said plurality of tuners such that said plurality of tuners process said signals communicated from said plurality of antennas based upon said combined symbol timing output.

2. The receiver system (10) of claim 1, wherein each of said plurality of tuners (16, 18) maintains symbol timing lock when one of said plurality of antennas (12, 14) in communication with one of said plurality of tuners is blocked.

3. The receiver system (10) of claim 1, wherein a first antenna (12) of said plurality of antennas is in communication with a first tuner (16) of said plurality of tuners, and a second antenna (14) of said plurality of antennas is in communication with a second tuner (18) of said plurality of tuners.

4. The receiver system (10) of claim 3, wherein said first antenna (12) has a first antenna pattern (32) and said second antenna (14) has a second antenna pattern (34), and at least a portion of said first antenna pattern (32) overlaps at least a portion of said second antenna pattern (34).

5. The receiver system (10) of claim 1, wherein said signal combiner (20) comprises a maximal-ratio-combining (MRC) coherent combiner (26) in communication with said plurality of tuners.

6. The receiver system (10) of claim 1, wherein said receiver system (10) is used with a vehicle (30).

7. The receiver system (10) of claim 1, wherein said signals received by said plurality of antennas comprise a satellite radio frequency (RF) signal.

8. A method of receiving signals (100), said method (100) comprising the steps of:
receiving signals (104) by at least one of a plurality of antennas (12, 14);
communicating said received signals (106) from said plurality of antennas to a plurality of tuners (16, 18);
determining a number of samples for each of the outputs from said plurality of tuners by a weight computation device (24), and communicating (110) outputs from said weight computation device (24) to a symbol timing combiner (22);
determining a combined symbol timing output (112) by said symbol timing combiner (22), wherein said symbol timing combiner (22) receives said outputs from each of said plurality of tuners and said outputs from said weight computation device (24);
communicating said combined symbol timing output (114) to said plurality of tuners; and
processing said signal (108) by each of said plurality of tuners based upon said combined symbol timing output.

9. The method (100) of claim 8 further comprising the step of maintaining symbol timing lock (116) by each of said plurality of tuners (16, 18) based upon said combined symbol timing output.

10. The method (100) of claim 8 further comprising the step of overlapping a first antenna pattern (32) of a first antenna (12) of said plurality of antennas with a second antenna pattern (34) of a second antenna (14) of said plurality of antennas.

11. The method (100) of claim 8 further comprising the step of computing a weight of said output of each of said plurality of tuners (16, 18).

12. The method (100) of claim 8, wherein said plurality of antennas (12, 14) are proximate one another.

13. The method (100) of claim 8, wherein a first antenna (12) of said plurality of antennas is in communication with a first tuner (16) of said plurality of tuners and a second antenna (14) of said plurality of antennas is in communication with said second tuner (18) of said plurality of tuners.

14. The method (100) of claim 8, wherein said plurality of antennas receive a satellite radio frequency (RF) signal.

## Patentansprüche

1. Empfängersystem (10), das aufweist:
eine Vielzahl von Antennen (12, 14), die Signale empfangen, wobei jede der Vielzahl von Antennen zueinander nahegelegen ist;
eine Vielzahl von Tunern (16, 18) in Kommunikation mit der Vielzahl von Antennen, wobei die empfangenen Signale an die Vielzahl von Tunern von der Vielzahl von Antennen kommuniziert werden;
einen Signalkombinierer (20) in Kommunikation mit der Vielzahl von Tunern, wobei der Signalkombinierer (20) eine Ausgabe von jedem der Vielzahl von Tunern kombiniert, und wobei der Signalkombinierer (20) eine Gewichtungsberechnungsvorrichtung (24) in Kommunikation mit der Vielzahl von Tunern aufweist; und
einen Symbol-Timing-Kombinierer (22) in Kommunikation mit dem Signalkombinierer (20) und der Vielzahl von Tunern, wobei Ausgaben von der Gewichtungsberechnungsvorrichtung (24) und Ausgaben von jedem der Vielzahl von Tunern (16, 18) durch den Symbol-Timing-Kombinierer (22) empfangen werden und der Symbol-Timing-Kombinierer (22) eine kombinierte Symbol-Timing-Ausgabe ausgibt, die von jedem der Vielzahl von Tunern empfangen wird, so dass die Vielzahl von Tunern die Signale verarbeitet, die von der Vielzahl von Antennen kommuniziert werden, basierend auf der kombinierten Symbol-Timing-Ausgabe.

2. Empfängersystem (10) gemäß Anspruch 1, wobei jeder der Vielzahl von Tunern (16, 18) eine Symbol-Timing-Sperre unterhält, wenn eine der Vielzahl von Antennen (12, 14) in Kommunikation mit einem der Vielzahl von Tunern blockiert ist.

3. Empfängersystem (10) gemäß Anspruch 1, wobei eine erste Antenne (12) der Vielzahl von Antennen in Kommunikation mit einem ersten Tuner (16) der Vielzahl von Tunern ist, und eine zweite Antenne (14) der Vielzahl von Antennen in Kommunikation mit einem zweiten Tuner (18) der Vielzahl von Tunern ist.

4. Empfängersystem (10) gemäß Anspruch 3, wobei die erste Antenne (12) ein erstes Antennenmuster (32) hat und die zweite Antenne (14) ein zweites Antennenmuster (34) hat, und zumindest ein Teil des ersten Antennenmusters (32) zumindest einen Teil des zweiten Antennenmusters (34) überlappt.

5. Empfängersystem (10) gemäß Anspruch 1, wobei der Signalkombinierer (20) einen MRC(Maximum-Ratio-Combining)-kohärenten Kombinierer (26) in Kommunikation mit der Vielzahl von Tunern aufweist.

6. Empfängersystem (10) gemäß Anspruch 1, wobei das Empfängersystem (10) mit einem Fahrzeug (30) verwendet wird.

7. Empfängersystem (10) gemäß Anspruch 1, wobei die Signale, die von der Vielzahl von Antennen empfangen werden, ein Satelliten-Funkfrequenz(RF - radio frequency)-Signal aufweisen.

8. Verfahren zum Empfangen von Signalen (100), wobei das Verfahren (100) die Schritte aufweist:
Empfangen von Signalen (104) durch zumindest eine aus einer Vielzahl von Antennen (12, 14);
Kommunizieren der empfangenen Signale (106) von der Vielzahl von Antennen zu einer Vielzahl von Tunern (16, 18);
Bestimmen einer Anzahl von Abtastwerten für jede der Ausgaben von der Vielzahl von Tunern durch eine Gewichtungsberechnungsvorrichtung (24) und Kommunizieren (110) der Ausgaben von der Gewichtungsberechnungsvorrichtung (24) an einen Symbol-Timing-Kombinierer (22);
Bestimmen einer kombinierten Symbol-Timing-Ausgabe (112) durch den Symbol-Timing-Kombinierer (22), wobei der Symbol-Timing-Kombinierer (22) die Ausgaben von jedem der Vielzahl von Tunern und die Ausgaben von der Gewichtungsberechnungsvorrichtung (24) empfängt;
Kommunizieren der kombinierten Symbol-Timing-Ausgabe (114) an die Vielzahl von Tunern; und
Verarbeiten des Signals (108) durch jeden der Vielzahl von Tunern basierend auf der kombinierten Symbol-Timing-Ausgabe.

9. Verfahren (100) gemäß Anspruch 8, das weiter aufweist den Schritt eines Unterhaltens einer Symbol-Timing-Sperre (116) durch jeden der Vielzahl von Tunern (16, 18) basierend auf der kombinierten Symbol-Timing-Ausgabe.

10. Verfahren (100) gemäß Anspruch 8, das weiter aufweist den Schritt eines Überlappens eines ersten Antennenmusters (32) einer ersten Antenne (12) aus der Vielzahl von Antennen mit einem zweiten Antennenmuster (34) einer zweiten Antenne (14) aus der Vielzahl von Antennen.

11. Verfahren (100) gemäß Anspruch 8, das weiter aufweist den Schritt eines Berechnens einer Gewichtung der Ausgabe von jedem der Vielzahl von Tunern (16, 18).

12. Verfahren (100) gemäß Anspruch 8, wobei die Vielzahl von Antennen (12, 14) zueinander nahegelegen sind.

13. Verfahren (100) gemäß Anspruch 8, wobei eine erste Antenne (12) der Vielzahl von Antennen in Kommunikation mit einem ersten Tuner (16) der Vielzahl von Tunern ist und eine zweite Antenne (14) der Vielzahl von Antennen in Kommunikation mit dem zweiten Tuner (18) der Vielzahl von Tunern ist.

14. Verfahren (100) gemäß Anspruch 8, wobei die Vielzahl von Antennen ein Satelliten-Funkfrequenz(RF - radio frequency)-Signal empfangen.

## Revendications

1. Système récepteur (10) comprenant :
une pluralité d'antennes (12, 14) qui reçoivent des signaux, dans lesquelles chacune des antennes de ladite pluralité d'antennes sont à proximité les unes des autres ;
une pluralité de syntoniseurs (16, 18) en communication avec ladite pluralité d'antennes, dans lesquels lesdits signaux reçus sont communiqués à ladite pluralité de syntoniseurs depuis ladite pluralité d'antennes ;
une unité de combinaison de signaux (20) en communication avec ladite pluralité de syntoniseurs, telle que ladite unité de combinaison de signaux (20) combine une sortie de chacun de ladite pluralité de syntoniseurs, et telle que ladite unité de combinaison de signaux (20) comprend un dispositif de calcul de pondération (24) en communication avec ladite pluralité de syntoniseurs ; et
une unité de combinaison de synchronisation de symboles (22) en communication avec ladite unité de combinaison de signaux (20) et avec ladite pluralité de syntoniseurs, telle que les sorties dudit dispositif de calcul de pondération (24) et les sorties de chacun de ladite pluralité de syntoniseurs (16, 18) sont reçues par ladite unité de combinaison de synchronisation de symboles (22), et ladite unité de combinaison de synchronisation de symboles (22) émet une sortie de synchronisation de symboles combinée qui est reçue par chacun de ladite pluralité de syntoniseurs, de sorte que ladite pluralité de syntoniseurs traite lesdits signaux communiqués depuis ladite pluralité d'antennes en se basant sur ladite sortie de synchronisation de symboles combinée.

2. Système récepteur (10) selon la revendication 1, dans lequel chacun de ladite pluralité de syntoniseurs (16, 18) maintient un verrouillage de synchronisation de symboles quand l'une de ladite pluralité d'antennes (12, 14) en communication avec l'un de ladite pluralité de syntoniseurs est bloquée.

3. Système récepteur (10) selon la revendication 1, dans lequel une première antenne (12) de ladite pluralité d'antennes est en communication avec un premier syntoniseur (16) de ladite pluralité de syntoniseurs, et une seconde antenne (14) de ladite pluralité d'antennes est en communication avec un second syntoniseur (18) de ladite pluralité de syntoniseurs.

4. Système récepteur (10) selon la revendication 3, dans lequel ladite première antenne (12) possède un premier motif d'antenne (32) et ladite seconde antenne (14) possède un second motif d'antenne (34), et au moins une portion dudit premier motif d'antenne (32) chevauche au moins une portion dudit second motif d'antenne (34).

5. Système récepteur (10) selon la revendication 1, dans lequel ladite unité de combinaison de signaux (20) comprend une unité de combinaison cohérente (26) assurant une combinaison à rapport maximal (MRC) en communication avec ladite pluralité de syntoniseurs.

6. Système récepteur (10) selon la revendication 1, dans lequel ledit système récepteur (10) est utilisé avec un véhicule (30).

7. Système récepteur (10) selon la revendication 1, dans lequel lesdits signaux reçus par ladite pluralité d'antennes comprennent un signal satellite à radiofréquences (RF).

8. Procédé de réception de signaux (100), ledit procédé (100) comprenant les étapes consistant à :
recevoir des signaux (104) par l'une au moins d'une pluralité d'antennes (12, 14) ;
communiquer lesdits signaux reçus (106) depuis ladite pluralité d'antennes à une pluralité de syntoniseurs (16, 18) ;
déterminer un nombre d'échantillons pour chacune des sorties provenant de ladite pluralité de syntoniseurs par un dispositif de calcul à pondération (24), et communiquer (110) les sorties provenant dudit dispositif de calcul à pondération (24) à une unité de combinaison de synchronisation de symboles (22) ;
déterminer une sortie de synchronisation de symboles combinée (112) par ladite unité de combinaison de synchronisation de symboles (22), telle que ladite unité de combinaison de synchronisation de symboles (22) reçoit lesdites sorties provenant de chacun de ladite pluralité de syntoniseurs et lesdites sorties provenant dudit dispositif de calcul à pondération (24) ;
communiquer ladite sortie de synchronisation de symboles combinée (114) à ladite pluralité de syntoniseurs ; et
traiter ledit signal (108) par chacun de ladite pluralité de syntoniseurs en se basant sur ladite sortie de synchronisation de symboles combinée.

9. Procédé (100) selon la revendication 8, comprenant en outre l'étape consistant à maintenir un blocage de synchronisation de symboles (116) par chacun de ladite pluralité de syntoniseurs (16, 18) en se basant sur ladite sortie de synchronisation de symboles combinée.

10. Procédé (100) selon la revendication 8, comprenant en outre l'étape consistant à faire chevaucher un premier motif d'antenne (32) d'une première antenne (12) de ladite pluralité d'antennes avec un second motif d'antenne (34) d'une seconde antenne (14) de ladite pluralité d'antennes.

11. Procédé (100) selon la revendication 8, comprenant en outre l'étape consistant à calculer une pondération de la sortie de chacun de ladite pluralité de syntoniseurs (16, 18).

12. Procédé (100) selon la revendication 8, dans lequel les antennes (12, 14) de ladite pluralité d'antennes (12, 14) sont à proximité les unes des autres.

13. Procédé (100) selon la revendication 8, dans lequel une première antenne (12) de ladite pluralité d'antennes est en communication avec un premier syntoniseur (16) de ladite pluralité de syntoniseurs et une seconde antenne (14) de ladite pluralité d'antennes est en communication avec un second syntoniseur (18) de ladite pluralité de syntoniseurs.

14. Procédé (100) selon la revendication 8, dans lequel les antennes de ladite pluralité d'antennes reçoivent un signal satellite à radiofréquences (RF).
